# EUROPÄISCHE PATENTSCHRIFT

(11) **EP 2 125 422 B1**
(45) Veröffentlichungstag und Bekanntmachung des Hinweises auf die Patenterteilung: **24.10.2012**
(21) Anmeldenummer: 08701158.1
(22) Anmeldetag: 18.01.2008
(51) Int. Cl.: B60K 35/00

(54) **INFORMATIONSEINRICHTUNG UND VERFAHREN ZUM BEREITSTELLEN VON INFORMATIONEN IN EINEM KRAFTFAHRZEUG MIT VERBESSERTER BEDIENBARKEIT**
INFORMATION DEVICE AND METHOD FOR PROVIDING ITEMS OF INFORMATION IN A MOTOR VEHICLE WITH IMPROVED OPERABILITY
DISPOSITIF D'INFORMATION ET PROCÉDÉ POUR FOURNIR DE MANIÈRE PLUS CONVIVIALE DES INFORMATIONS DANS UN VÉHICULE AUTOMOBILE

(30) Priorität: 17.02.2007 DE 102007007982
(43) Veröffentlichungstag der Anmeldung: 02.12.2009
(73) Patentinhaber: Volkswagen Aktiengesellschaft, 38440 Wolfsburg (DE)
(72) Erfinder: WU, Yongmei, 38108 Braunschweig (DE); MEDLER, Andreas, 38268 Lengede (DE); WÄLLER, Christoph, 38102 Braunschweig (DE); Volkswagen AG, 38436 Wolfsburg (DE); BENDEWALD, Lennart, 38442 Wolfsburg (DE); LILIENTHAL, Jörg, 38518 Gifhorn (DE); SPECKS, Will, 38440 Wolfsburg (DE)
(86) Internationale Anmeldenummer: PCT/EP2008/000382
(87) Internationale Veröffentlichungsnummer: WO 2008/098658

(56) Entgegenhaltungen:
- EP-A- 1 442 918
- US-A- 6 009 355

## Beschreibung

Die Erfindung betrifft eine Informationseinrichtung in einem Kraftfahrzeug mit mindestens einer Ausgabeeinrichtung, einer Steuereinrichtung, einer Speichervorrichtung, in der Informationen über Fahrzeugsysteme, Fahrzeugfunktionen und/oder Dienste abgelegt sind, und mindestens eine Eingabevorrichtung zum Erfassen einer Nutzereingabe zur Auswahl eines der Fahrzeugsysteme, der Fahrzeugfunktionen oder der Dienste, wobei die Steuereinrichtung ausgebildet ist, als Reaktion auf die über die Nutzereingabe erfasste Auswahl zumindest einen Teil der Informationen über das ausgewählte Fahrzeugsystem, die ausgewählte Fahrzeugfunktion oder den ausgewählten Dienst mittels der mindestens einen Ausgabeeinrichtung auszugeben. Die Erfindung betrifft ferner ein Verfahren zum Bereitstellen von Informationen in einem Kraftfahrzeug über Fahrzeugsysteme, Fahrzeugfunktionen und/oder Dienste.

In Fahrzeugen gemäß dem Stand der Technik sind alle für einen Benutzer wissenswerten technischen Merkmale eines Kraftfahrzeugs sowie dessen Ausstattungseigentümlichkeiten in der Regel in einem in gedruckter Form vorliegenden Handbuch oder Bordbuch enthalten. Die Nutzung eines Handbuchs wird gemeinhin als aufwendig, komplex und eher mühsam betrachtet, da viele Benutzer eher ungem längere gedruckte Texte lesen und insbesondere umfangreiche technische Inhalte häufig als abschreckend empfinden. Ferner gestaltet sich das Auffinden der gewünschten Informationen häufig schwierig, da von einem Nutzer Kenntnisse über eine Bezeichnung des Fahrzeugsystems, der Fahrzeugfunktion und/oder des Dienstes erforderlich sind, um die entsprechenden Einträge im Bordhandbuch ausfindig zu machen.

In der DE 199 41 973 A1 sind ein Verfahren und eine Vorrichtung zur aktiven Hilfestellung eines Kraftfahrzeugführers mittels mindestens eines Steuergerätes und einer Ein- und Ausgabeeinheit offenbart. Dabei kann das Steuergerät auf die Daten von fahrzeugzustandsrelevanten Sensoren und Steuergeräten und/oder Kömfortsteuergeräten und/oder interne oder externe Datenbanken zugreifen, wodurch eine automatische Unterstützung bei der Kommunikation zwischen dem Kraftfahrzeugführer und dem Fahrzeugsystem gegeben wird. Dabei wird insbesondere durch das Steuergerät ein kritischer Fahrzustand durch Auswertung der Daten der fahrzeugrelevanten Sensoren und Steuergeräte erfasst, sodann eine Liste von möglichen Handlungen des Kraftfahrzeugführers auf der Anzeigeeinheit dargestellt und eine durch den Kraftfahrzeugführer ausbotenen Informationen jedoch stets lediglich als Text in Listenform dargestellt. Eine Veränderung dieser Art der Informationsausgabe ist nicht vorgesehen, da es sich bei dem beschriebenen System auch nicht um eine allgemeine Informationsvorrichtung, sondern um ein System zur aktiven Hilfestellung durch automatisches Ausführen von Aktionen mittels eines Steuergerätes handelt. Weiter ist dieses System auch nicht dazu geeignet, den Kraftfahrzeugführer oder einen weiteren Nutzer möglichst umfassend über Fahrzeugsysteme, Fahrzeugfunktionen und/oder Dienste zu informieren und ihnen eine entsprechende Bedienung nahe zu bringen und zu erläutern.

Aus der DE 10 2005 002 277 A1 ist ein Informations system für ein Kraftfahrzeug mit einer Datenverarbeitungsvorrichtung und einer Anzeigevorrichtung zur Darstellung von gespeicherten Informationen bekannt, die mittels einer Bedieneinrichtung auswählbar sind, wobei es sich bei den Informationen um Informationen eines elektronischen Ratgeber-Handbuches handelt. Über die Bedieneinrichtung sind einzelne Kapitel des Ratgeber-Handbuches zur Darstellung durch die Anzeigevorrichtung auswählbar. Unter anderem kann das elektronische Ratgeber-Handbuch Anleitungen zur Verhaltensweise in Notfall- bzw. Pannensituationen sowie Hinweise zu Erste-Hilfe-Maßnahmen enthalten.

Die gattungsbildende EP 1 442 918 A2 beschreibt ein Verfahren zur Anzeige fahrzeugspezifischer Informationen. Um mit relativ geringem Aufwand eine für den Benutzer verständliche Darstellung fahrzeugspezifischer Informationssignale und fahrzeugspezifischer Informationen und Daten zu erreichen, ist dort vorgeschlagen, dass die fahrzeugspezifischen Informationen in einer dreidimensionalen Darstellung auf einer fahrzeugeigenen Anzeigeeinrichtung angezeigt werden. Hierbei können insbesondere dreidimensionale Animationen ausgeführt werden.

Aus der ebenfalls gattungsbildenden US 6,009,355 A ist ein Multimedieninformations- und Steuerungssystem für eine Verwendung in einem Kraftfahrzeug bekannt, dass mindestens eine Schnittstelle aufweist, die einen Nutzer in die Lage versetzt, um auf Informationen bezüglich des Kraftfahrzeugs und Fahrzeugsteuerungsfunktionen in effizienter Weise zuzugreifen. Der Nutzer kann aus einer Vielzahl von auf einer Anzeigeeinrichtung dargestellten Optionen in der Schnittstelle auswählen. Durch Audio-, Video- und/oder Textmedien werden dem Nutzer Informationen bezüglich der ausgewählten Option und der hiermit korrespondierenden Fahrzeugfunktion ausgegeben.

Der Erfindung liegt die Aufgabe zugrunde, ein Informationssystem und ein Verfahren zur Bereitstellung von Informationen über Fahrzeugsysteme, Fahrzeugfunktionen und/oder Dienste zu schaffen, bei denen ein Nutzer die von ihm gewünschten Informationen auf einfache Weise auswählen kann.

Die Aufgabe wird erfindungsgemäß durch eine Informationseinrichtung mit den Merkmalen des Patentanspruchs 1 sowie ein Verfahren zum Bereitstellen von Informationen mit den Merkmalen des Patentanspruchs 7 gelöst. Vorteilhafte Ausgestaltungen der Erfindung ergeben sich aus den Unteransprüchen.

Zur Lösung des technischen Problems ist bei einer Informationseinrichtung eingangs genannter Art vorgesehen, dass die mindestens eine Eingabevorrichtung mit einer Anzeigevorrichtung gekoppelt ist und auf einer Anzeigefläche der Anzeigevorrichtung in einem grafischen Eingabemodus Komponenten und Bedienelemente des Kraftfahrzeugs grafisch dargestellt sind, die für eine Bedienung, Verwendung, Ausführung und/oder Bereitstellung eines der Fahrzeugsysteme, einer der Fahrzeugfunktionen und/oder eines der Dienste vorgesehen sind, wobei mittels der mindestens einen Eingabevorrichtung die Auswahl eines der Fahrzeugsysteme, der Fahrzeugfunktionen und/oder Dienste vornehmbar ist, indem eine grafische Auswahl einer Entsprechenden der Komponenten oder eines Entsprechenden der Bedienelemente vornehmbar ist. Entsprechend ist ein Verfahren zum Bereitsteilen von Informationen in einem Kraftfahrzeug über Fahrzeugsysteme, Fahrzeugfunktionen und/oder Dienste, wobei die Informationen in einer Speichervorrichtung abgelegt sind, vorgesehen, dass die folgenden Schritte umfasst:
- Erfassen einer Nutzereingabe mittels mindestens einer Eingabevorrichtung,
- Auswählen eines der Fahrzeugsysteme, einer der Fahrzeugfunktionen oder eines der Dienste, basierend auf einer Nutzereingabe,
- Auslesen zumindest eines Teils der Informationen über das ausgewählte Fahrzeugsystem, die ausgewählte Fahrzeugfunktion oder den ausgewählten Dienst und
- Ausgeben des zumindest einen Teils der Informationen über das ausgewählte Fahrzeugsystem, die ausgewählte Fahrzeugfunktion oder den ausgewählten Dienst mittels mindestens einer Ausgabeeinrichtung,
wobei vorgesehen ist; dass auf einer Anzeigefläche einer mit der Eingabevorrichtung gekoppelten Anzeigevorrichtung Komponenten und Bedienelemente grafisch dargestellt werden, die für eine Bedienung, Verwendung, Ausführung und/oder Bereitstellung eines der Fahrzeugsysteme, der Fahrzeugfunktionen und/oder der Dienste vorgesehen sind, und über die mindestens eine Eingabevorrichtung eine grafische Auswahl einer der Komponenten oder eines der Bedienelemente erfasst wird und hierüber das Auswählen eines Entsprechenden der Fahrzeugsysteme, einer Entsprechenden der Fahrzeugfunktionen oder eines Entsprechenden der Dienste erfolgt. Die Informationseinrichtung umfasst somit eine grafische Benutzerschnittstelle, über die eine grafische Auswahl einer Komponente oder eines Bedienelements des Kraftfahrzeugs möglich ist, die bzw. das für eine Bedienung, Verwendung, Ausführung und/oder Bereitstellung eines der Fahrzeugsysteme, einer der Fahrzeugfunktionen und/oder eines der Dienste vorgesehen ist. Dies bedeutet, dass die dem Nutzer im Fahrzeug begegnenden realen Komponenten und Bedienelemente, mit denen der Nutzer im Betrieb des Fahrzeugs interagiert, in der grafischen Darstellung genutzt werden, um die hiermit verknüpften Fahrzeugsysteme, Fahrzeugfunktionen und/oder Dienste auszuwählen. Eine grafische Auswahl kann hierbei auf vielfältige Arten realisiert sein.

Um eine Orientierung des Nutzers bei der Auswahl zu erleichtern, ist erfindungsgemäß vorgesehen, dass die Komponenten und Bedienelemente grafisch In ihrem verbauten und/oder verwendeten Zustand im Kraftfahrzeug gezeigt sind.

Die Erfindung sieht vor, dass die mindestens eine Eingabevorrichtung eine Positionserfassungseinheit umfasst und das Fahrzeugsystem, die Fahrzeugfunktion oder der Dienst ausgewählt sind, dessen oder deren für eine Bedienung, Verwendung, Ausführung und/oder Bereitstellung vorgesehene Komponente oder Bedienelement an der bei der grafischen Auswahl erfassten Position dargestellt sind.

Erfindungsgemäß ist die Positionsermittlungseinheit mit der Anzeigevorrichtung als Touchscreen ausgebildet. Die Position, mittels der das Bedienelement oder die Komponente ausgewählt wird, die für eine Bedienung, Verwendung, Ausführung und/oder Bereitstellung der Fahrzeugsysteme, der Fahrzeugfunktionen und/oder der Dienste vorgesehen sind, wird einfach über ein Berühren der entsprechenden grafischen Darstellung ausgewählt.

Bei einer anderen Ausführungsform kann beispielsweise automatisch ein Fokus von einer Komponente bzw. einem Bedienelement zum nächsten bewegt werden. Der Fokus kann auf unterschiedliche Art und Weise grafisch dargestellt sein. Beispielsweise kann das mit dem Fokus versehene Bedienelement bzw. die mit dem Fokus versehene Komponente farblich hervorgehoben sein. Ist das Bedienelement bzw. die Komponente, über deren Bedienung der Nutzer Informationen erhalten möchte bzw. über deren hiermit verknüpftes Fahrzeugsystem, Fahrzeugfunktion oder Dienst der Nutzer Informationen erhalten möchte, mit dem Fokus versehen, so kann über eine Eingabe das entsprechende Bedienelement bzw. die entsprechende Komponente über das Betätigen der Eingabevorrichtung grafisch ausgewählt werden. Als grafische Auswahl werden all jene Verfahren angesehen, bei denen ein Nutzer über die Eingabevomchtung eine grafisch dargestellte Komponente oder ein grafisch dargestelltes Bedienelement auswählen kann. Eine Informationseinrichtung und ein Verfahren zum Bereitstellen von Informationnen, wie sie hier vorgeschlagen sind, bieten den Vorteil, dass der Nutzer keinerlei Kenntnisse über die Bezeichnung der einzelnen Fahrzeugsysteme, Fahrzeugfunktionen und/oder Dienste besitzen muss, um ein solches entsprechendes Fahrzeugsystem, eine Fahrzeugfunktion oder einen Dienst auszuwählen. Ferner ist eine solche Auswahl an einer realen Bediensituation orientiert. Möchte ein Kraftfahrzeugführer beispielsweise Informationen über die Funktionsweise seiner Klimaanlage erhalten, so wird er die grafische Darstellung eines Bedienfeldes der Klimaanlage auswählen. Um jedoch auch Informationen über Fahrzeugfunktionen, Fahrzeugsysteme und/oder Dienste zu erhalten, die entweder nicht direkt durch den Kraftfahrzeugführer bedient werden oder deren Bedienelemente er nicht kennt, ist es vorgesehen, auch Komponenten grafisch darzustellen, die an der Ausführung von Fahrzeugfunktionen und/oder einer Bereitstellung von Diensten beteiligt sind. Um beispielsweise eine Multifunktionsanzeige im Cockpit erläutert zu bekommen, muss ein Kraftfahrzeugführer somit nur die Darstellung dieser Multifunktionsanzeige grafisch auswählen.

Eine Benutzerschnittstelle, bei der die grafische Auswahl über ein Erfassen einer Position erfolgt, kann beispielsweise zusätzlich so ausgestaltet sein, dass ein Nutzer einen Zeiger auf der Anzeigefläche steuern kann. Befindet sich der Zeiger an der Position, an der das Bedienelement oder die Komponente dargestellt sind, die ausgewählt werden sollen, so kann ein Nutzer eine entsprechende Eingabe tätigen. Im Stand der Technik sind eine Reihe von Bedienelementen (oder Eingabevorrichtungen) bekannt, um einen solchen Zeiger einer Positionserfassungseinheit zu steuern. Diese umfassen beispielsweise Trackballs, Touchpads, Mäuse, Richtungstasten, Joysticks usw. Auch eine vor der Anzeigefläche angeordnete positionsempfindliche Sensoreinheit kann verwendet werden.

Bei einer besonders bevorzugten Ausführungsform der Erfindung sind die Komponenten und Bedienelemente fotorealistisch dargestellt.

Um eine Informationsvermittlung in unterschiedlichen Detailtiefen zu ermöglichen, kann es vorteilhaft sein, Fahrzeugsysteme, Fahrzeugfunktionen und/oder Dienste zu einem übergeordneten Fahrzeugsystem, einer übergeordneten Funktion oder einem übergeordneten Dienst zusammenzufassen oder entsprechend in Untersysteme, Unterfunktionen oder Unterdienste zu unterteilen. Um eine Auswahl in unterschiedlichen Ebenen zu ermöglichen, kann die grafische Auswahl menüartig ausgestaltet sein. Dies bedeutet, dass nach Auswahl eines Fahrzeugsystems dieses anschließend vergrößert auf der Anzeigefläche dargestellt sein kann, um einzelne Untersysteme gezielt auswählen zu können, über die eine Informationsausgabe gewünscht wird. Wird beispielsweise in einer ersten Ansicht das gesamte Fahrzeugcockpit grafisch dargestellt, so kann es vorgesehen sein, dass die dort dargestellten Bedienelemente und Fahrzeugsysteme beispielsweise als Bedienfelder mit mehreren Bedienelementen oder Obersysteme betrachtet werden.

Um einem Nutzer zu ermöglichen festzustellen, über welche dargestellten Komponenten und Bedienelemente Informationen verfügbar sind, ist daher bei einer bevorzugten Aüsführungsform vorgesehen, dass die Komponenten und Bedienelemente, die für eine Bedienung, Verwendung, Ausführung und/oder Bereitstellung eines der Fahrzeugsysteme, einer der Fahrzeugfunktionen und/oder eines der Dienste vorgesehen sind und über das oder die ausgebbare Informationen in der Speichervorrichtung abgelegt sind, grafisch hervorgehoben, insbesondere farblich hervorgehoben, dargestellt sind.

In einigen Fällen wird ein Nutzer jedoch nicht genau wissen, über welches Bedienelement eine Fahrzeugfunktion ausgelöst werden kann und/oder welche Komponente für die Bereitstellung der Funktion verwendet wird. In einem solchen Fall ist es hilfreich, wenn der Nutzer zusätzlich die Möglichkeit hat die Funktion über einen Begriff auszuwählen. Daher ist bei einer bevorzugten Ausführungsform vorgesehen, dass ein Begriff-Eingabemodus vorgesehen ist, in dem eines der Fahrzeugsysteme, eine der Fahrzeugfunktionen und/oder einer der Dienste mittels einer Begriffserfassung und eines Vergleichs des mindestens einen erfassten Begriffs mit Bezeichnungen der Fahrzeugsysteme, Fahrzeugfunktionen und/oder Dienste auswählbar sind.

Ebenso gibt es Situationen, in denen der Nutzer zwar die Begrifflichkeit nicht genau kennt, diese jedoch aus einer angebotenen Anzahl von Begrifflichkeitän auswählen könnte. Daher sieht eine Ausführungsform der Erfindung vor, dass ein Menü-Eingabemodus vorgesehen ist, in dem eines der Fahrzeugsysteme, eine der Fahrzeugfunktionen und/oder einer der Dienste mittels Menüs, die alphanumerische Einträge umfassen und vorzugsweise listenartig ausgestaltet sind, auswählbar sind.

Die Informationseinrichtung ist bevorzugt so ausgebildet, dass die mindestens eine Ausgabeeinrichtung die Anzeigevorrichtung umfasst.

Die Merkmale der Weiterbildungen des erfindungsgemäßen Verfahrens weisen dieselben Vorteile wie die entsprechenden Merkmale der Informationseinrichtung auf.

Nachfolgend wird die Erfindung anhand bevorzugter Ausführungsbeispiele näher erläutert. Hierbei zeigen:
- Fig. 1: eine schematische Darstellung eines Kraftfahrzeugs mit einer Informationseinrichtung;
- Fig. 2: eine Multifunktionsbedienvorrichtung, in die eine Informationseinrichtung integriert ist;
- Fig. 3: eine beispielhafte Ausgestaltung einer Benutzerschnittstelle einer Informationseinrichtung;
- Fig. 4a, 4b: eine weitere Ausführungsform einer Benutzerschnittstelle einer Informationseinrichtung; und
- Fig. 5a - 5g: Ausschnitte einer filmischen Informationswiedergabe, die exemplarisch Informationen über eine Geschwindigkeitsregelanlage bereitstellt.

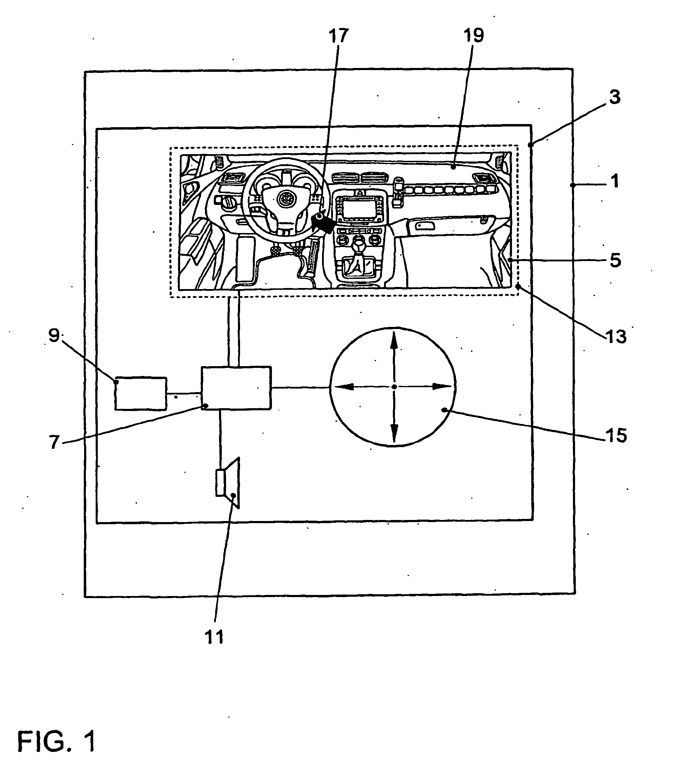

In Fig. 1 ist schematisch ein Kraftfahrzeug 1 dargestellt. Das Kraftfahrzeug umfasst eine Informationseinrichtung 3. Die Informationseinrichtung 3 umfasst eine Anzeigevorrichtung 5, die mit einer Steuereinrichtung 7 verbunden ist. Die Steuereinrichtung 7 wiederum ist mit einer Speichervorrichtung 9 verbunden. In der Speichervorrichtung 9 sind Daten abgelegt, mit denen mittels der Steuereinrichtung 7 auf der Anzeigevorrichtung 5 eine grafische Benutzerschnittstelle umgesetzt werden kann. Um eine Nutzereingabe zu erfassen, ist mit der Anzeigevorrichtung 5 eine Positionserfassungseinheit 13 gekoppelt. Diese ist in der dargestellten Ausführungsform als berührungsempfindliche Sensoreinheit integral mit der Anzeigevorrichtung 5 als Touchscreen ausgebildet. Zusätzlich umfasst die Informationseinrichtung ein als Joystick ausgebildetes Bedienelement 15, welches mit der Steuereinrichtung 7 gekoppelt ist. Über das Bedienelement 15 kann ein Zeiger (Cursor) 17 auf einer Anzeigefläche 19 der Anzeigevorrichtung 5 bewegt werden. Ferner ist das Bedienelement 15 so ausgebildet, dass eine Position auf der Anzeigefläche 19, an der sich der Zeiger 17 aktuell befindet, erfasst werden kann. Hierüber ist eine grafische Auswahl von auf der Anzeigefläche 17 dargestellten grafischen Objekten möglich. Eine grafische Auswahl ist ebenfalls über ein Berühren der Anzeigefläche 19, d.h. des Touchscreens, möglich. Bei der Speichervorrichtung kann es sich um einen beliebigen Speicher handeln. Insbesondere kann der Speicher als Wechselmedium, beispielsweise DVD, ausgebildet sein.

Auf der Anzeigefläche 19 ist eine grafische Benutzeroberfläche dargestellt, die über die Steuereinrichtung 7, die Speichervorrichtung 9, die Anzeigevorrichtung 5 sowie eine Eingabevorrichtung, die die Positionserfassungseinheit 13 und das Bedienelement 15 umfasst, umgesetzt ist. Auf der Anzeigefläche 19 sind Bedienelemente und Komponenten des Kraftfahrzeugs 1 dargestellt. Wird ein Bedienelement grafisch ausgewählt, so werden die Informationen über das Bedienelement und/oder mittels dieses Bedienelements bedienter Fahrzeugsysteme, Fahrzeugfunktionen und/oder Dienste zumindest teilweise aus der Speichervorrichtung ausgelesen und über die Anzeigefläche, beispielsweise in Form eines Films, wiedergegeben. Akustische Informationen werden hierbei über ein Audiosystem 11 ausgegeben. Die Anzeigevorrichtung 5 und das Audiosystem 11 stellen Ausgabeeinrichtungen dar.

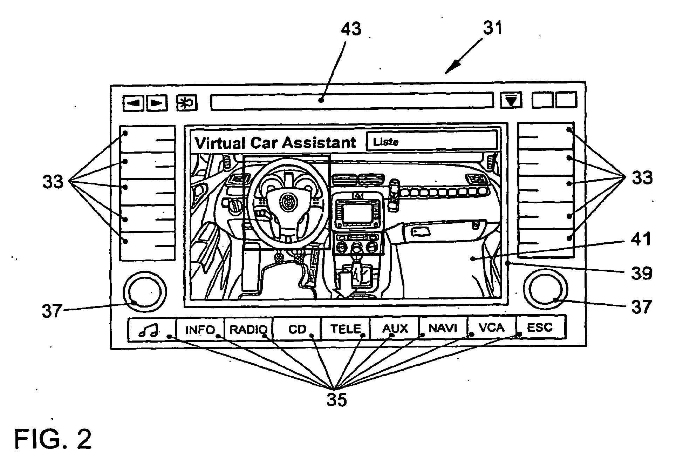

In dem Informationssystem in Fig. 2 ist eine Ausführungsform einer Multifunktionsbedienvorrichtung 31 dargestellt, in die eine Informationseinrichtung integriert ist. Über die Multifunktionsbedienvorrichtung 31 sind Fahrzeugsysteme, beispielsweise eine Klimaanlage, Fahrzeugfunktionen, beispielsweise eine Geschwindigkeitsregelung, und/oder Dienste, beispielsweise ein Telematikdienst, bedien- und steuerbar. Eine Abgrenzung der Begriffe Fahrzeugsystem, Fahrzeugfunktion und Dienst ist nur schwierig möglich und im Zusammenhand mit der Ausführung der beschriebenen Erfindung nicht wesentlich. Die dargestellte Multifunktionsbedienvorrichtung 31 umfasst als Tasten ausgebildete frei programmierbare Bedienelemente 33 und mit einer festen Funktion versehene Bedienelemente 35. Ferner umfasst die Multifunktionsbedienvorrichtung zwei Drehdrückknöpfe 37 zum Erfassen weiterer Nutzereingaben. Eine Anzeigevorrichtung 39 ist als Touchscreen ausgebildet, so dass auch über eine Berührung einer Anzeigefläche 41 der Anzeigevorrichtung 39 eine Benutzereingabe erfassbar ist. Die Informationen über die unterschiedlichen Fahrzeugsysteme, Fahrzeugfunktionen und/oder Dienste sowie die notwendigen Instruktionen, mittels derer eine Steuereinrichtung der Multifunktionsbedienvorrichtung 31 eine Informationseinrichtung mit einer grafischen Benutzerschnittstelle umsetzen kann, sind beispielsweise auf einer DVD abgespeichert, die über einen in die Multifunktionsbedienvorrichtung 31 integrierten DVD-Player ausgelesen werden können. Eine solche DVD wird beispielsweise in einen Einführschlitz 43 eingeführt. Über eine Autostartfunktion des DVD-Players wird dann programmgesteuert eine Benutzerschnittstelle gestartet, über die ein Fahrzeugstem, eine Fahrzeugfunktion und/oder ein Dienst ausgewählt werden können, über welches dann zumindest ein Teil der gespeicherten Informationen vorzugsweise über die Anzeigevorrichtung wiedergegeben wird.

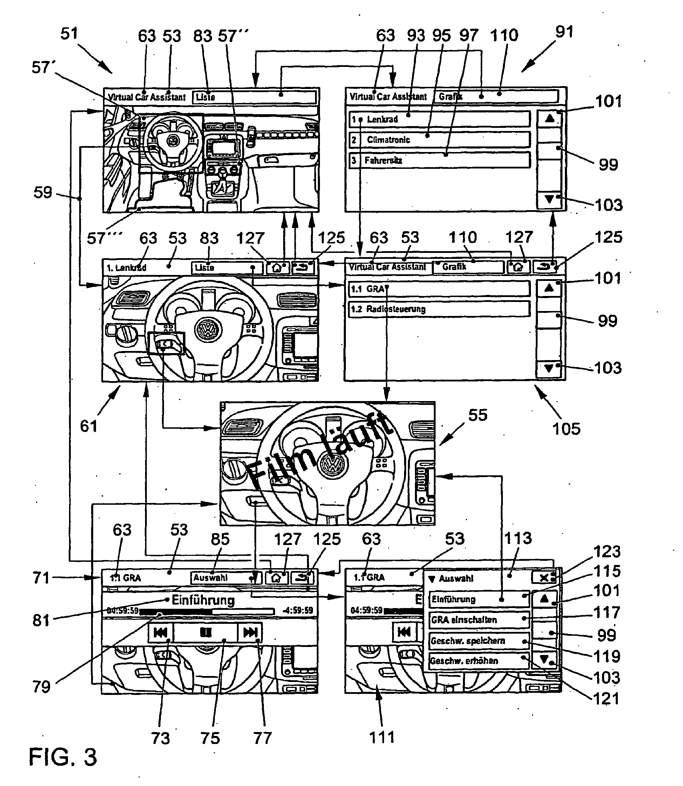

Anhand von Fig. 3 soll eine beispielhafte Ausgestaltung einer Benutzerschnittstelle einer Informationseinrichtung erläutert werden. Dargestellt sind unterschiedliche Ansichten der Anzeigefläche einer Anzeigevorrichtung, die als Touchscreen ausgebildet ist Über einzelne Pfeile, die jeweils von einem Kreis in einer der Ansichten zu einer der anderen Ansichten weisen, ist die logische Struktur der Benutzerschnittstelle wiedergegeben. Die Informationseinrichtung, zu der die in Fig. 3 dargestellte Benutzerschnittstelle gehört, wird auch als Virtual-Car-Assistant (virtueller Fahrzeugassistent) bezeichnet. Wenn die Informationseinrichtung in Betrieb genommen wird, so erhält man die grafische Hauptansicht 51. Die Ansichten weisen jeweils in einem Bedienmodus eine Kopfleiste 53 auf. In einem Wiedergabemodus, der in einer Informationswiedergäbeansicht 55 dargestellt ist, wird vorzugsweise die gesamte Anzeigefläche zur Wiedergabe von Informationen verwendet. In der Hauptansicht 51 ist ein Fahrzeuginnenraum fotorealistisch grafisch dargestellt. Einzelne Fahrzeugkomponenten und Bedienelemente sind grafisch hervorgehoben. Im dargestellten Ausführungsbeispiel sind dies exemplarisch ein Lenkrad 57', eine als Klimatronik bezeichnete Klimaanlage 57" und ein Fahrersitz 57"'. In anderen Ausführungsbeispielen können mehr oder weniger Komponenten und/oder Bedienelemente in der Hauptansicht grafisch hervorgehoben sein. Ferner können grafische Elemente dargestellt werden, die ein Navigieren zwischen unterschiedlichen Innen- und/oder Außenansichten des Kraftfahrzeugs ermöglichen, so dass unterschiedliche Fahrzeugkomponenten und Bedienelemente vorzugsweise in ihrem verbauten oder verwendeten Zustand dargestellt werden können. Über eine Berührung einer der grafisch hervorgehobenen Komponenten oder Bedienelemente 57, beispielsweise eine Berührung des Lenkrads 5T. gelangt der Nutzer, wie mittels eines Pfeils 59 angedeutet ist, zu einer grafischen Unteransicht 61. Um einem Nutzer eine Orientierung innerhalb der grafischen Benutzerschnittstelle zu erleichtern, ist in der Kopfleiste 53 jeweils eine Bezeichnung 63 der jeweiligen Ansicht angegeben. In der Unteransicht 61 ist das Lenkrad gemeinsam mit daran angeordneten Bedienelementgruppen 65 und einem Schalthebel 67 grafisch hervorgehoben. Berührt der Benutzer die grafische Darstellung des Schalthebels 67, so gelangt er zur Informationswiedergabeansicht 55. Filmisch animiert wird die Funktionsweise der Geschwindigkeitsregelanlage erläutert, die mittels des Schalthebels 67 bedient wird. Berührt der Benutzer die Anzeigefläche während der Informationswiedergabe, so gelangt er zu einer Ansicht 71, die der Unteransicht 61 gleicht, in der jedoch Wiedergabebedienelemente 73 bis 77 sowie ein Verlaufbalken 79 und eine Kapitelbezeichnung 81 dargestellt sind. Mittels des Wiedergabebedienelements 73 kann ein Kapitel zurückgesprungen werden und mittels des Wiedergabebedienelements 77 zum nächsten Kapitel der aktuellen Informationswiedergabe gesprungen werden. Mittels des als Pausetaste ausgebildeten Wiedergabebedienelements 75 kann die im Hintergrund fortgesetzte Informationswiedergabe unterbrochen werden.

Die grafische Hauptansicht 51, die Unteransicht 61 und die Ansicht 71 sind Ansichten der Benutzerschnittstelle im grafischen Eingabemodus, der primär für eine Nutzereingabe vorgesehen ist. Alternativ kann der Nutzer jedoch eine menüorientierte Eingabe wählen. Hierfür ist in der grafischen Hauptansicht 51 und der Unteransicht 61 jeweils in der Kopfleiste 53 ein Bedienelement "Liste" 83 sowie in der Ansicht 63 ein Klappleistenbedienelement "Auswahl" 85 zur Auswahl vorgesehen. Betätigt man das Bedienelement "Liste" 83 in der grafischen Hauptansicht 51, so gelangt man zur Menühauptansicht 91. Das Menü ist listenartig ausgestaltet und umfasst Einträge "1 Lenkrad" 93, "2 Klimatronik" 95 und "3 Fahrersitz" 97. Diese Einträge weisen alphanumerische Bezeichnungen auf. Die als virtuelle Bedienelemente ausgebildeten Listeneinträge 93 bis 97 korrespondieren mit den grafisch hervorgehobenen Komponenten und Bedienelementen 57' bis 57'". Um in einer umfangreicheren Liste navigieren zu können, ist an einem rechten Rand ein Rollbalken 99 mit Aufwärts- und Abwärtstasten 101 bzw. 103 angeordnet.

Bei einer Betätigung des Listeneintrags "1 Lenkrad" 93 gelangt der Nutzer zu einer Menüunteransicht 105, die mit der grafischen Unteransicht 61 korrespondiert. In der Menüunteransicht 105 existieren weitere Listeneinträge "1.1. GRA (Geschwindigkeitsregelanlage)" 107 und "1.2. Radiosteuerung" 109. Wird der weitere Listeneintrag "1.1. GRA" 107 berührt, so gelangt man zur Informationswiedergabeansicht 55. Die Menühauptansicht 99 und die Menüunteransicht 105 weisen jeweils ein Bedienelement "Grafik" 110 in der Kopfleiste 53 auf. Wird dieses betätigt, so gelangt man in die korrespondierende grafische Hauptansicht 51 bzw. Unteransicht 61.

Wird in der Ansicht 71 das Klappleistenelement "Auswahl" 85 betätigt, so gelangt man zur Auswahlansicht 111. In der Auswahlarisicht 111 werden in einer Klappleiste 113 Klappleisteneinträge "Einführung" 115, "GRA einschalten" 117, "Geschwindigkeit speichern" 119 und "Geschwindigkeit erhöhen" 121 eingeblendet. Die Klappleiste 113 umfasst ebenfalls einen Rollbalken 99 mit Aufwärtstaste 101 und Abwärtstaste 103. Die Klappleisteneinträge 115 bis 121 korrespondieren mit Kapiteln der Informationswiedergabe. Über eine Abbruchtaste 123 der Klappleiste 113 gelangt man zurück zur Ansicht 71. Wird hingegen ein Klappleisteneintrag, beispielsweise "Einführung" 115 betätigt, so gelangt man zu einer entsprechenden Stelle in der Informationswiedergabe und erhält die Informationswiedergabeansicht 55. Die untergeordneten Menüebenen sowohl im grafischen Eingabemodus als auch im Menüeingabemodus weisen jeweils eine Rücksprungtaste 125 und eine so genannte "Home-(Ausgangs-)taste" 127 auf. Bei einem Betätigen der Hometaste 127 gelangt man zur grafischen Hauptansicht 51. Eine Betätigung der Rücksprungtaste 125 führt jeweils dazu, dass man zu der nächst höher liegenden Ebene im jeweiligen Eingabemodus gelangt.

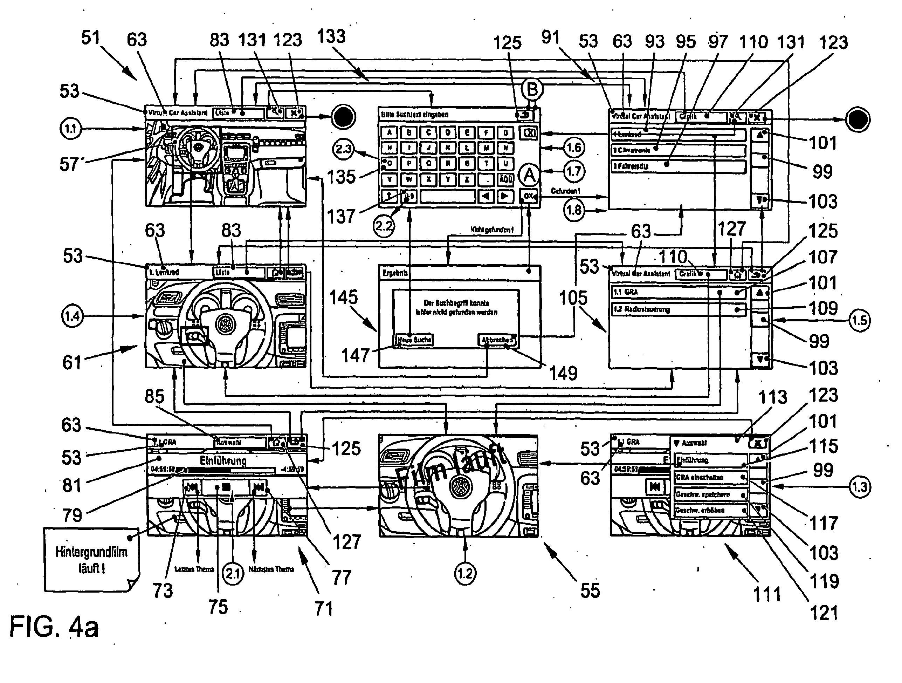

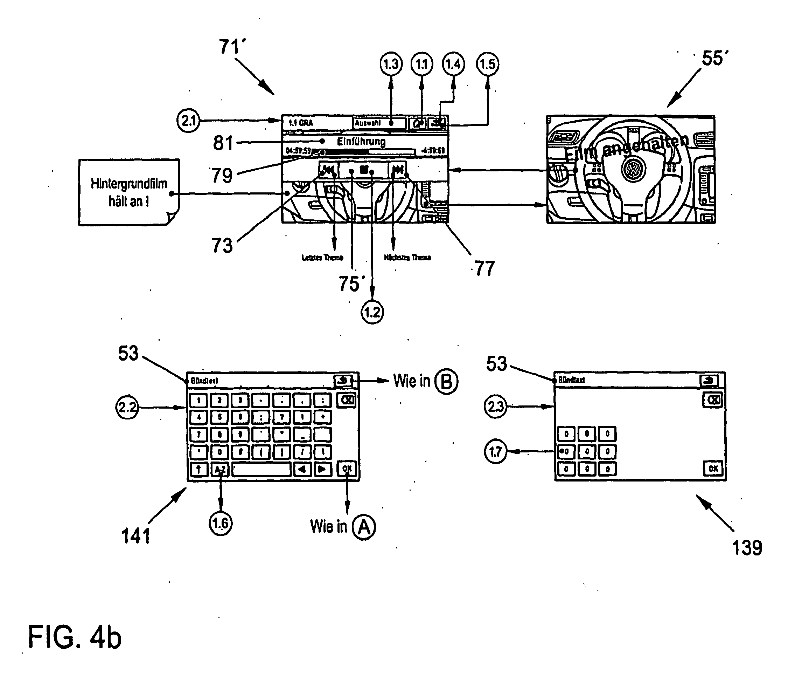

In Fig. 4a und 4b sind die Ansichten einer erweiterten Ausführungsform einer Informationseinrichtung dargestellt. Die Ausführungsform nach Fig. 4a und 4b unterscheiden sich von der Ausführungsform nach Fig. 3 dadurch, dass in der Kopfleiste 53 der grafischen Hauptansicht 51 und der Menühauptansicht 91 jeweils zusätzlich eine Suchtaste 131 vorgesehen ist. Über eine Betätigung der Suchtaste 131 gelangt ein Nutzer zu einer Tastaturansicht 133, in der eine Tastatur dargestellt ist. Mittels dieser kann ein Suchbegriff eingegeben werden. Beim Betätigen einzelner Tasten, beispielsweise einer "O"-Taste 135 oder einer "0-9"-Taste 137, gelangt man zu entsprechenden Untertastaturansichten 139 bzw. 141. Mittels der in der Tastaturansicht 133 bzw. den Tastaturunteransichten 139 und 141 dargestellten Tasten ist es möglich, einen oder mehrere Begriffe einzugeben: Betätigt man eine "OK"-Taste 143, so werden der oder die eingegebenen Begriffe mit gespeicherten Bezeichnungen von Fahrzeugsystemen, Fahrzeugfunktionen und/oder Diensten verglichen. Anschließend werden die grafische Unteransicht 61 oder die Menüunteransicht 105 angezeigt, in der entweder die Komponente und/oder das Bedienelement dargestellt sind, die zur Bedienung, Ausführung, Verwendung und/oder Bereitstellung des entsprechenden Fahrzeugsystems, der entsprechenden Fahrzeugfunktion oder des entsprechenden Dienstes verwendet werden, oder der entsprechende Listeneintrag enthalten ist. Der entsprechende Listeneintrag bzw. das entsprechende Bedienelement oder die entsprechende Komponente sind grafisch so hervorgehoben, dass eine Informationswiedergabe durch eine Betätigung durch den Nutzer leicht ausgelöst werden kann. Bei einer alternativen Ausführungsform kann vorgesehen sein, dass direkt die Informationswiedergabe bei einer Übereinstimmung ausgelöst wird.

Wird bei der Suche keine Obereinstimmung gefunden, so gelangt der Nutzer zu einer Suchergebnisansicht 145. In der Suchergebnisansicht 145 wird dem Nutzer mitgeteilt, dass die Suche erfolglos war. Über ein Bedienelement "neue Suche" 147 kann er zu der Tastaturansicht 133 zurückkehren. Über eine Abbruchtaste 149 kann er zu der entsprechenden Hauptansicht 51 oder 91 zurückkehren. Alternativ oder zusätzlich kann eine Spracherkennungseinheit vorgesehen sein, über die ebenfalls Begriffe erfasst werden, die dann anschließend mit Bezeichnungen vergleichen werden. Wird eine Übereinstimmung festgestellt, so wird entweder sofort mit der Informatiönswiedergabe in der Informationswiedergabeansicht 55 fortgefahren oder die entsprechende grafische Ansicht bzw. die entsprechende Menüansicht angezeigt Für die einzelnen Fahrzeugsysteme, Fahrzeugfunktionen und/oder Dienste können mehrere Bezeichnungen vorhanden sein. Beim Vergleichen kann auch ein Ähnlichkeitsabgleich ausgeführt werden.

Die Ausführungsform nach Fig. 4a und 4b unterscheiden sich von der nach Fig. 3 auch dadurch, dass ausgeführt ist, wie sich die Benutzerschniftstelle bei einem Betätigen des Wieder gabebedienelements "Pause" 75 in der Ansicht 71 verhält. Man gelangt zu einer korrespondierenden Ansicht 71'. In dieser ist das Wiedergabebedienelement "Pause" 75 durch ein Wiedergabebedienelement "Abspielen" 75' ersetzt. Ferner erkennt man, dass man durch eine Berührung der Anzeigefläche in einem unteren Bereich der korrespondierenden Ansicht 71' zu einer korrespondierenden Informationswiedergabeansicht 55' gelangt. Diese korrespondiert mit der Informationswiedergabeansicht 55. In der korrespondierenden Informationswiedergabeansicht 55' ist die filmische Informationswiedergabe angehalten. Berührt man in der korrespondierenden Informationswiedergabeansicht 55' die Anzeigefläche gelangt man zurück zur korrespondierenden Ansicht 71' und über ein Betätigen des Wiedergabebedienelements "Abspielen" 75' zu der informationswiedergabeansicht 55.

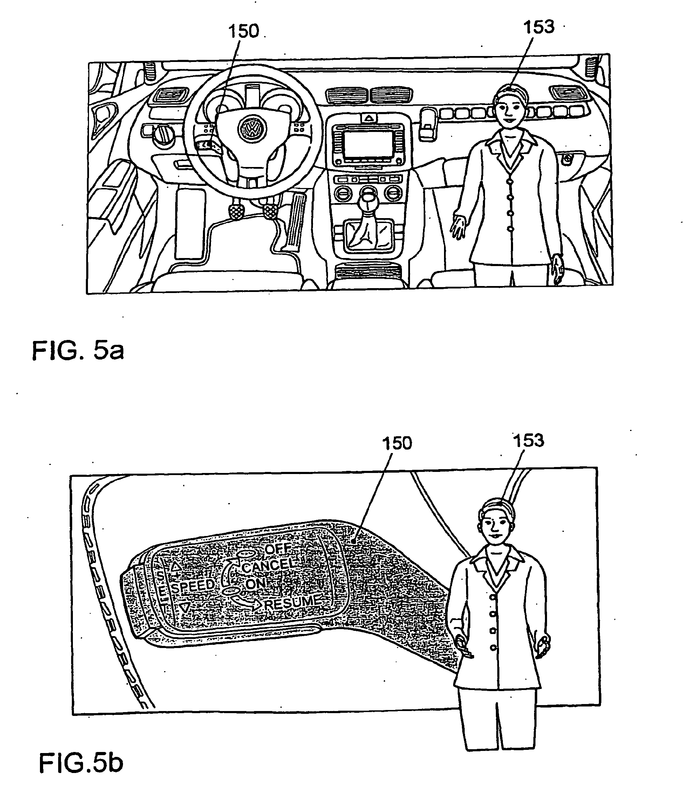

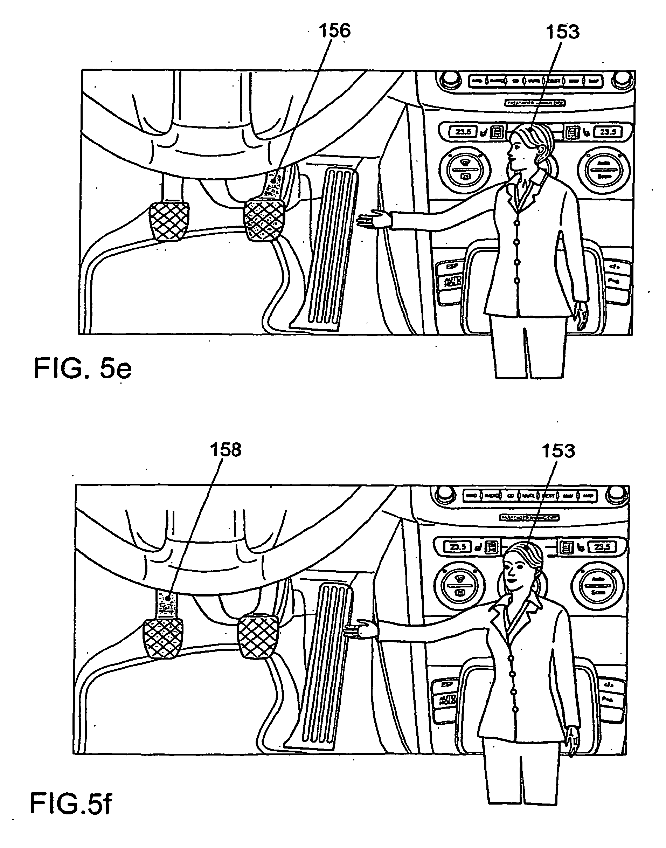

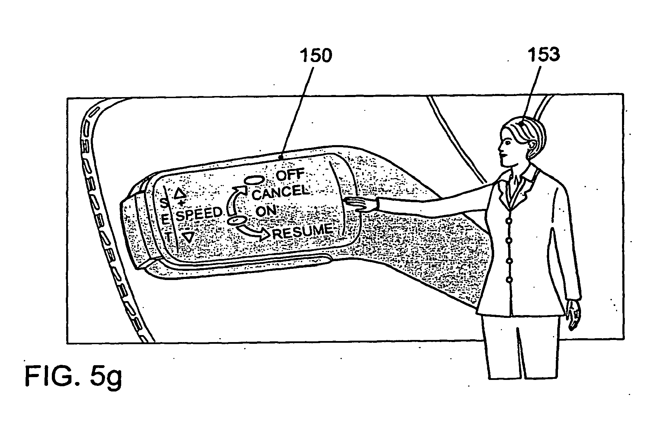

Anhand von Fig. 5a bis 5g soll exemplarisch eine informationswiedergabe, die vorzugsweise animiert, beispielsweise filmisch, und unterstützt durch einen virtuellen Charakter, der auch als Avatar bezeichnet wird, dargestellt werden. Erläutert wird die Infomiationswiedergabe zur Erklärung der Geschwindigkeitsregelanlage. Dargestellt sind einzelne Ausschnitte aus einer filmisch animierten Informationswiedergabe, in der ein Avatar die Erläuterungen vornimmt

In Fig. 5a ist das Cockpit eines Kraftfahrzeugs mit allen Anzeige- und Bedieneinrichtungen dargestellt. Ein Bedienhebel 150 der Geschwindigkeitsregelanlage mit allen seinen Bedienelementen ist farblich hervorgehoben dargestellt. Ein Avatar 153 teilt durch Hand- und Körperbewegungen und durch Sprachausgabe über eine akustische Ausgabeeinrichtung mit: "Ich werde Ihnen zeigen, wie Sie die elektronische Geschwindigkeitsregelanlage, kurz GRA, bedienen können." Danach erscheint eine Ansicht nach Fig. 5b. Der Bedienhebel 150 ist gegenüber der Darstellung nach Fig. 5a herangezoomt und nimmt den größten Teil der Anzeigefläche ein. Der Bedienhebel 150 ist auch hier farblich hervorgehoben gegenüber dem Hintergrund dargestellt. Der Avatar 153 gibt Angaben über die Funktion der Geschwindigkeitsregelanlage: "Die Geschwindigkeitsregelanlage hält eine eingestellte Geschwindigkeit zwischen 30 und 210 km/h konstant." Danach gibt der Avatar 153 Informationen zum Einschalten der Geschwindigkeitsregelanlage: "Ziehen Sie diesen Hebel zum Lenkrad hin, bis er einrastet." Im Film bewegt sich der Bedienhebel 150 zum Benutzer hin.

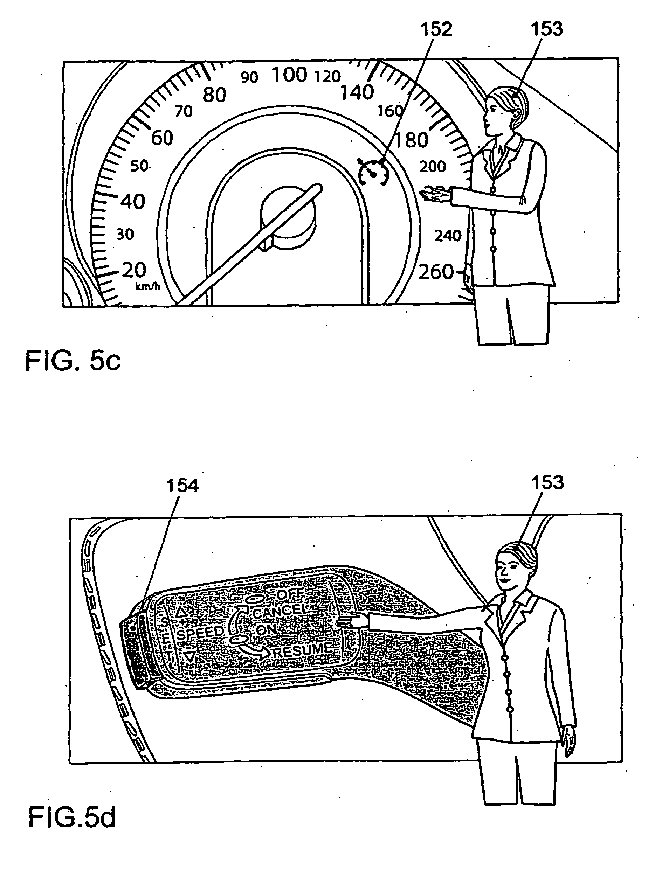

Im Filmablauf erscheint nun eine Ansicht nach Fig. 5c, die eine Ansicht eines Kombiinstrumentes mit einer Geschwindigkeitsanzeige und einem Symbol 152 zeigt. Der Avatar 153 weist durch eine Handbewegung auf das Symbol 152 hin und macht folgende Sprachausgabe: Nach dem Einschalten erscheint dieses Symbol im Kombiinstrument." Danach erklärt der Avatar 153 das Setzen bzw. Speichern der gewünschten Geschwindigkeit: "Fahren Sie mit der gewünschten Geschwindigkeit und drücken Sie die Taste 'Set' seitlich am Hebel." Die "Set"-Taste 154 wird gegenüber den restlichen. Bedienelementen zur verbesserten Erkennbarkeit hervorgehoben (Fig. 5d). Nach dem Setzen der Geschwindigkeit erklärt der Avatar 153 die Möglichkeit des Erhöhens und Erniedrigens der gespeicherten Geschwindigkeit auf ähnliche Weise. Zur Darstellung, wie das vorübergehende Ausschalten der GeschwindigKehsregelanlage mittels des Avatars 153 erklärt wird, werden die Fig. 5e bis 5g des Films herangezogen. In den Figuren ist das jeweilige Bedienelement, Bremspedal 156, Kupplungspedal 158 oder Bedienhebel 150, welches zum Ausschalten verwendet werden kann, gegenüber dem Hintergrund hervorgehoben. Zusätzlich wird die Erklärung der Bedienfunktion über die Bewegung und Sprachausgabe des Avatars 153 unterstützt: "Treten Sie das Bremspedal, treten Sie bei Schaltgetriebefahrzeugen das Kupplungspedal oder drücken Sie den Bedienhebel leicht vom Lenkrad weg, um die Geschwindigkeitsregelanlage vorübergehend auszuschalten. Zum Wiedereinschaltender Geschwindigkeitsregelanlage lassen Sie das Bremspedal bzw. das Kupplungspedal los und ziehen Sie den Bedienhebel leicht zum Lenkrad hin."

Die beschriebenen Ausführungsformen haben lediglich einen beispielhaften Charakter. Insbesondere der menügestützte Bestandteil der Benutzerschnittstelle zur Auswahl der Informationen, die wiedergegeben werden sollen, kann anders ausgestaltet sein.

### Bezugszeichenliste

- 1: Kraftfahrzeug
- 3: Informationseinrichtung
- 5: Anzeigevorrichtung
- 7: Steuereinrichtung
- 9: Speichervorrichtung
- 11.: Audiosystem
- 13: Positionserfassungseinheit
- 15: Joystick
- 17: Zeiger (Cursor)
- 19: Anzeigefläche
- 31: Multifunktionsbedienvorrichtung
- 33, 35: Bedienelemente
- 37: Drehdrückknöpfe
- 39: Anzeigevorrichtung
- 41: Anzeigefläche
- 43: Einführschlitz
- 51: grafische Hauptansicht
- 53: Kopfleiste
- 55: Informationswiedergabeansicht
- 55': korrespondierende Informationswiedergabeansicht
- 57, 57, 57", 57"': Komponenten und Bedienetemente
- 59: Pfeil
- 61: grafische Unteransicht
- 63: Bezeichnung
- 65: Bedienelementgruppen
- 67: Schalthebel
- 71: Ansicht
- 71': korrespondierende Ansicht
- 73: Wiedergabebedienelement "Kapitel zurück"
- 75: Wiedergabebedienelement "Pause"
- 75': Wiedergabebedienelement "Abspielen"
- 77: Wiedergabebedienelement "Kapitel vor"
- 79: Verlaufsbalken
- 81: Kapitelbezeichnung
- 83: Bedienelement "Liste"
- 85: Knappleistenelement Auswahl"
- 91.: Menühauptansicht
- 93: Listeneintrag "1 Lenkrad"
- 95: Usteneintrag °2 Kiimatronik"
- 97: Listeneintrag "3 Fahrersitz"
- 99: Scroll bar (Rollbalken)
- 101: Aufwärtstaste
- 103: Abwärtstaste
- 105: Menüunteransicht
- 107: weiterer Listeneintrag "1.1. GRA"
- 109: weiterer Listeneintrag "1.2. Radiosteuerung"
- 110: Bedienelemerit "Grafik"
- 111: Auswahlansicht
- 113: Klappleiste
- 115: Klappleisteneintrag "Einführung"
- 117: Klappleisteneintrag "GRA einschalten"
- 119: Klappleisteneintrag "Geschwindigkeit speichern"
- 121: Klappleisteneintrag "Geschwindigkeit erhöhen"
- 123: Abbruchtaste
- 125: Rücksprungtaste
- 127: Hometaste
- 131: Suchtaste
- 133: Tastaturansicht
- 135: "O"-Taste
- 137: "0-9"-Taste
- 139-141: Listenunteransicht
- 143: "OK"-Taste
- 145: Suchergebnisansicht
- 147: "neue Suche"-Taste
- 149: "Abbruch"-Taste
- 150: Bedienhebel
- 152: Symbol
- 153: Avatar
- 154: "Set"-Taste
- 156: Bremspedal
- 158: Kupptungspedal

## Patentansprüche

1. Informationseinrichtung (3) in einem Kraftfahrzeug (1) mit mindestens einer Ausgabeeinrichtung, einer Steuereinrichtung (7), einer Speichervorrichtung (9), in der Informationen über Fahrzeugsysteme, Fahrzeugfunktionen undloder Dienste abgelegt sind, und mindestens eine Eingabevorrichtung zum Erfassen einer Nutzereingabe zur Auswahl eines der Fahrzeugsysteme, der Fahrzeugfunktionen oder der Dienste,
wobei die mindestens eine Eingabevorrichtung eine Positionserfassungseinheit (13) umfasst, die mit der Anzeigevorrichtung als Touchscreen ausgebildet ist,
wobei die Steuereinrichtung ausgebildet ist, als Reaktion auf die über die Nutzereingabe erfasste Auswahl zumindest einen Teil der Informationen über das ausgewählte Fahrzeugsystem, die ausgewählte Fahrzeugfunktion oder den ausgewählten Dienst mittels der mindestens einen Ausgabeeinrichtung auszugeben,
wobei
auf einer Anzeigefläche (19) der mit der mindestens einen Eingabevorrichtung gekoppelten Anzeigevorrichtung (5) in einem grafischen Eingabemodus Komponenten und Bedienelemente (57, 57'. 57", 57"') des Kraftfahrzeugs grafisch in ihrem verbauten und/oder verwendeten Zustand im Kraftfahrzeugs (1) dargestellt sind, die für eine Bedienung, Verwendung, Ausführung und/oder Bereitstellung eines der Fahrzeugsysteme, einer der Fahrzeugfunktion und/oder eines der Dienste vorgesehen sind, wobei mittels der mindestens einen Eingabevorrichtung die Auswahl eines der Fahrzeugsysteme, der Fahrzeugfunktionen oder der Dienste vernehmbar ist, **dadurch gekennzeichnet, dass** eine grafische Auswahl einer Entsprechenden der Komponenten oder eines Entsprechenden der Bedienelemente in der Weise vornehmbar ist, dass das Fahrzeugsystem, die Fahrzeugfunktion oder der Dienst ausgewählt sind, für dessen oder deren für eine Bedienung, Verwendung, Ausführung und/oder Bereitstellung vorgesehene Komponente oder Bedienelement eine Berührung an der Position ihrer entsprechenden Darstellung in Ihrem verbauten und/oder verwendeten Zustand im Kraftfahrzeug (1) erfasst ist.

2. Informationseinrichtung (3) nach Anspruch 1, **dadurch gekennzeichnet, dass** die Komponenten und Bedienelemente (57, 57', 57", 57"') fotorealistisch dargestellt sind.

3. Informationseinrichtung (3) nach einem der genannten Ansprüche, **dadurch gekennzeichnet, dass** die Komponenten und Bedienelemente (57, 57', 57", 57'"), die für eine Bedienung, Verwendung, Ausführung und/oder Bereitstellung des mindestens einen Fahrzeugsystems, der mindestens einen Fahrzeugfunktion und/oder des mindestens einen Dienstes vorgesehen sind und über das oder die ausgebbare Informationen in der Speichervorrichtung abgelegt sind, grafisch hervorgehoben, insbesondere farblich hervorgehoben, dargestellt sind.

4. Informationseinrichtung (3) nach einem der genannten Ansprüche, **dadurch gekennzeichnet, dass** zusätzlich ein Begriff-Eingabemodus vorgesehen ist, in dem eines der Fahrzeugsysteme, eine der Fahrzeugfunktionen und/oder einer der Dienste mittels einer Begriffserfassung und eines Vergleichs des mindestens einen erfassten Begriffs mit Bezeichnungen der Fahrzeugsysteme, Fahrzeugfunktionen und/oder Dienste auswählbar sind.

5. Informationseinrichtung (3) nach einem der genannten Ansprüche, **dadurch gekennzeichnet, dass** zusätzlich ein Menü-Eingabemodus vorgesehen ist, in dem eines der Fahrzeugsysteme, eine der Fahrzeugfunktionen und/oder einer der Dienste mittels Menüs, die alphanumerische Einträge (93-97, 107-109) umfassen und vorzugsweise listenartig ausgestaltet sind, auswählbar sind.

6. Informationseinrichtung (3) nach einem der genannten Ansprüche, **dadurch gekennzeichnet, dass** die mindestens eine Ausgabeeinrichtung die Anzeigevorrichtung (5) umfasst.

7. Verfahren zum Bereitstellen von Informationen in einem Kraftfahrzeug (1) über Fahrzeugsysteme, Fahrzeugfunktionen und/oder Dienste, wobei die Informationen in einer Speichervorrichtung (9) abgelegt sind, umfassend die Schritte:
Erfassen einer Nutzereingabe mittels mindestens einer Eingabevorrichtung,
Auswählen eines der Fahrzeugsysteme, einer der Fahrzeugfunktionen oder eines der Dienste basierend auf der Nutzereingabe_{;} Auslesen zumindest eines Teils der Informationen über das ausgewählte Fahrzeugsystem, die ausgewählte Fahrzeugfunktion oder den ausgewählten Dienst aus der Speichervorrichtung (9) und Ausgeben des zumindest einen Teils der Informationen über das ausgewählte Fahrzeugsystem, die ausgewählte Fahrzeugfunktion oder den ausgewählten Dienst mittels mindestens einer Ausgabeeinrichtung.
**dadurch gekennzeichnet, dass**
auf einer Anzeigefläche. einer mit der Eingabevorrichtung gekoppelten Anzeigevorrichtung (5) Komponenten und Bedienelemente (57, 5T, 57", 57'") grafisch in ihrem verbauten und/oder verwendeten Zustand im Kraftfahrzeug (1) dargestellt werden, die für eine Bedienung, Verwendung. Ausführung und/oder Bereitstellung eines der Fahrzeugsysteme, der Fahrzeugfunktionen und/oder der Dienste vorgesehen sind, und über die mindestens eine Eingabevorrichtung, die eine Positionserfassungseinheit (13) umfasst, die mit der Anzeigevorrichtung als Touchscreen ausgebildet ist., eine grafische Auswahl einer der Komponenten oder eines der Bedienelemente (57, 57', 57", 57"') erfasst wird und hierüber eine Auswahl eines Entsprechenden der Fahrzeugsysteme, einer Entsprechenden der Fahrzeugfunktionen oder eines Entsprechenden der Dienste erfolgt, wobei bei der grafischen Auswahl eine Berührposition auf der Anzeigefläche erfasst, und das Fahrzeugsystem, die Fahrzeugfunktion oder der Dienst ausgewählt werden, dessen oder deren Komponente oder Bedienelement (57, 57', 57", 57"'), die oder das zur Bedienung, Verwendung, Ausführung und/oder Bereitstellung des Entsprechenden der Fahrzeugsysteme, der Entsprechenden der Fahrzeugfunktionen und/oder des Entsprechenden der Dienste vorgesehen sind, an der erfassten Position in ihrem verbauten und/oder verwendeten Zustand im Kraftfahrzeug (1) dargestellt sind.

8. Verfahren nach Anspruch 7, **dadurch gekennzeichnet, dass** die Komponenten und Bedienelemente (57, 57', 57", 57"'). die für eine Bedienung, Verwendung, Ausführung und/oder Bereitstellung des mindestens einen Fahrzeugsystems, der mindestens einen Fahrzeugfunktion und/oder des mindestens einen Dienstes vorgesehen sind und über das oder die ausgebbare Informationen in der Speichervorrichtung abgelegt sind, grafisch hervorgehoben, insbesondere farblich hervorgehoben, dargestellt werden.

9. Verfahren nach einem der Ansprüche 7 oder 8, **dadurch gekennzeichnet, dass** die Komponenten und Bedienelemente (57, 57', 67", 57"') fotorealistisch dargestellt werden.

10. Verfahren nach einem der Ansprüche 8 oder 9, **dadurch gekennzeichnet; dass** zusätzlich in einem Begriff-Eingabemodus mindestens ein Begriff erfasst wird und die Auswahl eines der Fahrzeugsysteme, Fahrzeugfunktionen oder Dienste alternativ oder zusätzlich basierend auf dem mindestens einen erfassten Begriff vorgenommen wird, wobei der mindestens eine erfasste Begriff mit Bezeichnungen der Fahrzeugsysteme, der Fahrzeugfunktionen und/oder der Dienste verglichen wird und die Auswahl basierend auf dem Vergleichsergebnis vorgenommen wird.

11. Verfahren nach einem der Ansprüche 8 bis 10, **dadurch gekennzeichnet, dass** die Begriffserfassung mittels einer Spracherkennungseinheit erfolgt.

12. Verfahren nach einem der Ansprüche 8 bis 11, **dadurch gekennzeichnet, dass** bei der Begriffserfassung alphanumerische Zeichen erfasst werden.

13. Verfahren nach einem der Ansprüche 8 bis 12, **dadurch gekennzeichnet, dass** zusätzlich in einem Menü-Eingabemodus auf der Anzeigefläche (19) Menüs, die alphanumerische Einträge (93-97, 107-109) umfassen und vorzugsweise listenartig ausgestaltet sind, angezeigt werden, und eine Auswahl eines der Fahrzeugsysteme, einer der Fahrzeugfunktionen oder eines der Dienste alternativ oder zusätzlich basierend auf einem angewählten Eintrag vorgenommen wird, wobei die Einträge (93-97, 107-109) den Fahrzeugsystemen, der Fahrzeugfunktionen oder den Diensten zugeordnet sind.

## Claims

1. Information device (3) in a motor vehicle (1), having at least one output device, a control device (7), a storage apparatus (9) which stores information relating to vehicle systems, vehicle functions and/or services, and at least one input apparatus for detecting a user input for selecting one of the vehicle systems, the vehicle functions or the services,
the at least one input apparatus comprising a position detection unit (13) which, with, the display apparatus, is in the form of a touchscreen,
the control device being designed, in response to the selection detected via the user input, to output at least one part of the information relating to the selected vehicle system, the selected vehicle function or the selected service using the at least one output device,
components and operating elements (57, 57', 57", 57"') of the motor vehicle which are provided for operating, using, implementing and/or providing one of the vehicle systems, one of the vehicle functions and/or one of the services being graphically displayed in their installed and/or used state in the motor vehicle (1) in a graphical input mode on a display surface (19) of the display apparatus (5) coupled to the at least one input apparatus, one of the vehicle systems, the vehicle functions or the services being selectable using the at least one input apparatus, **characterized in that** a corresponding one of the components or a corresponding one of the operating elements can be graphically selected in such a manner that that vehicle system, that vehicle function or that service is selected for whose component or operating element, provided for operation, use, implementation and/or provision, contact is detected at the position of its corresponding display in its installed and/or used state in the motor vehicle (1).

2. Information device (3) according to Claim 1, **characterized in that** the components and operating elements (57, 57', 57" , 57"') are displayed in a photo-realistic manner.

3. Information device (3) according to one of said claims, **characterized in that** the components and operating elements (57, 57', 57", 57"') which are provided for operating, using, implementing and/or providing the at least one vehicle system, the at least one vehicle function and/or the at least one service and via which outputtable information is stored in the storage apparatus are displayed in a graphically highlighted manner, in particular in a manner highlighted in colour.

4. Information device (3) according to one of said claims, **characterized in that** provision is additionally made for a term input mode in which one of the vehicle systems, one of the vehicle functions and/or one of the services can be' selected by detecting a term and comparing the at least one detected term with names of the vehicle systems, vehicle functions and/or services.

5. Information device (3) according to one of said claims, **characterized in that** provision is additionally made for a menu input mode in which one of the vehicle systems, one of the vehicle functions and/or one of the services can be selected using menus which comprise alphanumeric entries (93-97, 107-109) and are preferably in the form of lists.

6. Information device (3) according to one of said claims, **characterized in that** the at least one output device comprises the display apparatus (5).

7. Method for providing information relating to vehicle systems, vehicle functions and/or services in a motor vehicle (1), the information being stored in a storage apparatus (9), comprising the steps of:
detecting a user input using at least one input apparatus, selecting one of the vehicle systems, one of the vehicle functions or one of the services on the basis of the user input, reading at least one part of the information relating to the selected vehicle system, the selected'vehicle function or the selected service from the storage apparatus (9), and outputting the at least one part of the information relating to the selected vehicle system, the selected vehicle function or the selected service using at least one output device,
**characterized in that**
components and operating elements (57, 57', 57", 57"') which are provided for operating, using, implementing and/or providing one of the vehicle systems, the vehicle functions and/or the services are graphically displayed in their installed and/or used state in the motor vehicle (1) on a display surface of a display apparatus (5) coupled to the input apparatus, and a graphical selection of one of the components or one of the operating elements (57, 57', 57", 57"') is detected using the at least one input apparatus which comprises a position detection unit (13) which, with the display apparatus, is in the form of a touchscreen, and a corresponding one of the vehicle systems, a corresponding one of the vehicle functions or a corresponding one of the services is selected thereby, a contact position on the display surface being detected in the graphical selection, and that vehicle system, that vehicle function or that service is selected, whose component or operating element (57, 57', 57", 57"'), provided for operating, using, implementing and/or providing the corresponding one of the vehicle systems, the corresponding one of the vehicle functions and/or the corresponding one of the services, is displayed at the detected position in its installed and/or used state in the motor vehicle (1).

8. Method according to Claim 7, **characterized in that** the components and operating elements (57, 57', 57", 57"') which are provided for operating, using, implementing and/or providing the at least one vehicle system, the at least one vehicle function and/or the at least one service and via which outputtable information is stored in the storage apparatus are displayed in a graphically highlighted manner, in particular in a manner highlighted in colour.

9. Method according to either of Claims 7 and 8, **characterized in that** the components and operating elements (57, 57', 57", 57"') are displayed in a photo-realistic manner.

10. Method according to either of Claims 8 and 9, **characterized in that** at least one term is additionally detected in a term input mode and one of the vehicle systems, vehicle functions or services is alternatively or additionally selected on the basis of the at least one detected term, the at least one detected term being compared with names of the vehicle systems, the vehicle functions and/or the services and the selection being carried out on the basis of the comparison result.

11. Method according to one of Claims 8 to 10, **characterized in that** terms are detected using a voice recognition unit.

12. Method according to one of Claims 8 to 11, **characterized in that** alphanumeric characters are detected when detecting terms.

13. Method according to one of Claims 8 to 12, **characterized in that** menus which comprise alphanumeric entries (93-97, 107-109) and are preferably in the form of lists are additionally displayed on the display surface (19) in a menu input mode, and one of the vehicle systems, one of the vehicle functions or one of the services is alternatively or additionally selected .on the basis of the chosen entry, the entries (93-97, 107-109) being associated with the vehicle systems, the vehicle functions or the services.

## Revendications

1. Dispositif d'information (3) dans un véhicule automobile (1), comprenant au moins un dispositif de diffusion, un dispositif de commande (7), un dispositif de mémorisation (9) dans lequel sont stockées des informations sur les systèmes du véhicule, les fonctions du véhicule et/ou des services, et au moins un dispositif d'entrée pour détecter une saisie d'utilisateur destinée à sélectionner l'un des systèmes du véhicule, des fonctions du véhicule ou des services, l'au moins un dispositif d'entrée comprenant une unité de détection de position (13) qui, avec le dispositif d'affichage, est réalisée sous la forme d'un écran tactile,
l'unité de commande étant configurée pour, en réaction à la sélection détectée par le biais de la saisie d'utilisateur, diffuser au moyen de l'au moins un dispositif de diffusion au moins une partie des informations sur le système du véhicule sélectionné, la fonction du véhicule sélectionnée ou le service sélectionné,
des composants et des éléments de conduite (57, 57', 57", 57"') du véhicule automobile étant représentés sous forme graphique sur une surface d'affichage (19) du dispositif d'affichage (5) couplé avec l'au moins un dispositif d'entrée dans leur état monté et/ou utilisé dans le véhicule automobile (1), lesquels sont prévus pour une conduite, une utilisation, une exécution et/ou une mise à disposition de l'un des systèmes du
véhicule, de l'une des fonctions du véhicule et/ou de l'un des services, la sélection de l'un des systèmes du véhicule, des fonctions du véhicule ou des services pouvant être effectuée au moyen de l'au moins un dispositif d'entrée,
**caractérisé en ce qu'**il est possible d'effectuer une sélection graphique d'un composant correspondant parmi les composants ou d'un élément de conduite correspondant parmi les éléments de conduite de telle sorte que le système du véhicule, la fonction du véhicule ou le service séléctionné(e) est celui ou celle pour les composants ou les éléments de conduite prévus pour une conduite, une utilisation, une exécution et/ou une mise à disposition duquel ou de laquelle un contact est détecté à la position de la représentation qui lui correspond dans son état monté et/ou utilisé dans le véhicule automobile (1).

2. Dispositif d'information (3) selon la revendication 1, **caractérisé en ce que** les composants et les éléments de conduite (57, 57', 57", 57"') sont représentés de manière photoréaliste.

3. Dispositif d'information (3) selon l'une des revendications précédentes, **caractérisé en ce que** les composants et les éléments de conduite (57, 57', 57", 57"') qui sont prévus pour une conduite, une utilisation, une exécution et/ou une mise à disposition de l'au moins un système du véhicule, de l'au moins une fonction du véhicule et/ou de l'au moins un service et qui sont stockés dans le dispositif de mémorisation par le biais de la ou des informations diffusables sont représentés avec une mise en valeur graphique, notamment avec une mise en valeur en couleur.

4. Dispositif d'information (3) selon l'une des revendications précédentes, **caractérisé en ce qu'**il est en plus prévu un mode de saisie de terme dans lequel l'un des systèmes du véhicule, l'une des fonctions du véhicule et/ou l'un des services peut être sélectionné au moyen de la saisie d'un terme et d'une comparaison de l'au moins un terme saisi avec des désignations des systèmes du véhicule, des fonctions du véhicule et/ou des services.

5. Dispositif d'information (3) selon l'une des revendications précédentes, **caractérisé en ce qu'**il est en plus prévu un mode de saisie par menu dans lequel l'un des systèmes du véhicule, l'une des fonctions du véhicule et/ou l'un des services peut être sélectionné au moyen de menus qui comprennent des entrées alphanumériques (93-97, 107-109) et sont de préférence agencés à la manière de listes.

6. Dispositif d'information (3) selon l'une des revendications précédentes, **caractérisé en ce que** l'au moins un dispositif de diffusion comprend le dispositif d'affichage (5).

7. Procédé pour mettre à disposition des informations dans un véhicule automobile (1), sur les systèmes du véhicule, les fonctions du véhicule et/ou des services, les informations étant stockées dans un dispositif de mémorisation (9), comprenant les étapes suivantes :
détection d'une saisie d'utilisateur au moyen d'au moins un dispositif d'entrée,
sélection de l'un des systèmes du véhicule, de l'une des fonctions du véhicule ou de l'un des services en se basant sur la saisie d'utilisateur, lecture d'au moins une partie des informations sur le système du véhicule sélectionné, la fonction du véhicule sélectionnée ou le service sélectionné depuis le dispositif de mémorisation (9) et diffusion de l'au moins une partie des informations sur le système du véhicule sélectionné, la fonction du véhicule sélectionnée ou le service sélectionné au moyen d'au moins un dispositif de diffusion,
**caractérisé en ce que**
des composants et des éléments de conduite (57, 57', 57", 57"') sont représentés sous forme graphique sur une surface d'affichage d'un dispositif d'affichage (5) couplé avec le dispositif d'entrée dans leur état monté et/ou utilisé dans le véhicule automobile (1), lesquels sont prévus pour une conduite, une utilisation, une exécution et/ou une mise à disposition de l'un des systèmes du véhicule, des fonctions du véhicule et/ou des services, et une sélection graphique de l'un des composants ou de l'un des éléments de conduite (57, 57', 57", 57"') est détectée par le biais de l'au moins un dispositif d'entrée, lequel comprend une unité de détection de position (13) qui, avec le dispositif d'affichage, est réalisée sous la forme d'un écran tactile, et une sélection d'un système correspondant parmi les systèmes du véhicule, d'une fonction correspondante parmi les fonctions du véhicule ou d'un service correspondant parmi les services est ainsi effectuée, une position de contact sur la surface d'affichage étant détectée lors de la sélection graphique et le système du véhicule, la fonction du véhicule ou le service sélectionné(e) est celui ou celle dont le composant ou l'élément de conduite (57, 57', 57", 57"'), qui est prévu pour la conduite, l'utilisation, l'exécution et/ou la mise à disposition du système correspondant parmi les systèmes du véhicule, de la fonction correspondante parmi les fonctions du véhicule ou du service correspondant parmi les services, est représenté à la position détectée dans son état monté et/ou utilisé dans le véhicule automobile (1).

8. Procédé selon la revendication 7, **caractérisé en ce que** les composants et les éléments de conduite (57, 57', 57", 57"') qui sont prévus pour une conduite, une utilisation, une exécution et/ou une mise à disposition de l'au moins un système du véhicule, de l'au moins une fonction du véhicule et/ou de l'au moins un service et qui sont stockés dans le dispositif de mémorisation par le biais de la ou des informations diffusables sont représentés avec une mise en valeur graphique, notamment avec une mise en valeur en couleur.

9. Procédé selon l'une des revendications 7 et 8, **caractérisé en ce que** les composants et les éléments de conduite (57, 57', 57", 57"') sont représentés de manière photoréaliste.

10. Procédé selon l'une des revendications 8 ou 9, **caractérisé en ce qu'**au moins un terme est en plus saisi dans un mode de saisie de terme et la sélection de l'un des systèmes du véhicule, de l'une des fonctions du véhicule ou de l'un des services est effectuée en variante ou en complément en se basant sur l'au moins un terme saisi, l'au moins un terme saisi étant comparé avec des désignations des systèmes du véhicule, des fonctions du véhicule et/ou des services et la sélection étant effectuée en se basant sur le résultat de la comparaison.

11. Procédé selon l'une des revendications 8 à 10, **caractérisé en ce que** la saisie de terme s'effectue au moyen d'une unité de reconnaissance vocale.

12. Procédé selon l'une des revendications 8 à 11, **caractérisé en ce que** des caractères alphanumériques sont saisis lors de la saisie de terme.

13. Procédé selon l'une des revendications 8 à 12, **caractérisé en ce que** des menus, lesquels comprennent des entrées alphanumériques (93-97, 107-109) et sont de préférence agencés à la manière de listes, sont en plus affichés sur la surface d'affichage (19) dans un mode de saisie par menu et une sélection de l'un des systèmes du véhicule, de l'une des fonctions du véhicule ou de l'un des services peut être effectuée en alternative ou en complément en se basant sur une entrée sélectionnée, les entrées (93-97, 107-109) étant associées aux systèmes du véhicule, aux fonctions du véhicule ou aux services.
